# EUROPÄISCHE PATENTSCHRIFT

(11) **EP 4 572 874 B1**
(45) Veröffentlichungstag und Bekanntmachung des Hinweises auf die Patenterteilung: **24.12.2025**
(21) Anmeldenummer: 23757596.4
(22) Anmeldetag: 15.08.2023
(51) Int. Cl.: B01D 46/10, B01D 46/79

(54) **PARTIKELAUSTRAGSEINRICHTUNG UND VERFAHREN ZUR NASSREINIGUNG EINER PARTIKELAUSTRAGSEINRICHTUNG**
PARTICLE REMOVAL DEVICE AND METHOD FOR WET CLEANING OF A PARTICLE REMOVAL DEVICE
DISPOSITIF D'ÉLIMINATION DE PARTICULES ET PROCÉDÉ DE NETTOYAGE HUMIDE D'UN DISPOSITIF D'ÉLIMINATION DE PARTICULES

(30) Priorität: 17.08.2022 DE 102022120740
(43) Veröffentlichungstag der Anmeldung: 25.06.2025
(73) Patentinhaber: Glatt Gesellschaft mit beschränkter Haftung, 79589 Binzen (DE)
(72) Erfinder: THIES, Jochen, 79540 Lörrach (DE); ZIMMERMANN, Dirk, 79664 Wehr (DE)
(74) Vertreter: Patentanwälte Magenbauer & Kollegen Partnerschaft mbB
(86) Internationale Anmeldenummer: PCT/EP2023/072475
(87) Internationale Veröffentlichungsnummer: WO 2024/038058

(56) Entgegenhaltungen:
- WO-A1-2004/016988
- JP-A- H07 328 379

## Beschreibung

Die Erfindung betrifft eine Partikelaustragseinrichtung zum Abscheiden von Partikeln aus einem Prozessgasstrom, mit einem über eine vertikal ausgerichtete Hochachse verfügenden Einrichtungsgehäuse, mit einem das Einrichtungsgehäuse in eine die abzuscheidenden Partikel aufweisende Prozesskammer und eine das entstaubte Prozessgas aufnehmende Reingaskammer unterteilenden Filter, mit einem an der Prozesskammer angeordneten Partikeleintrag und einem an der Prozesskammer angeordneten Partikelaustrag, und mit einem in der Reingaskammer angeordneten Reingasauslass, wobei die Partikelaustragseinrichtung eine in der Reingaskammer angeordnete, wenigstens eine Reingaskammer-Reinigungsdüse aufweisende Reingaskammer-Reinigungseinrichtung zur im Reinigungsbetrieb erfolgenden Nassreinigung des bezüglich der Hochachse eine geneigte Filterebene aufweisenden Filters aufweist.

Zudem betrifft die Erfindung ein Verfahren zur Nassreinigung einer Partikelaustragseinrichtung zum Abscheiden von Partikeln aus einem Prozessgasstrom, mit einem über eine vertikal ausgerichtete Hochachse verfügenden Einrichtungsgehäuse, mit einem das Einrichtungsgehäuse in eine die abzuscheidenden Partikel aufweisende Prozesskammer und eine das entstaubte Prozessgas aufnehmende Reingaskammer unterteilenden Filter, mit einem an der Prozesskammer angeordneten Partikeleintrag und einem an der Prozesskammer angeordneten Partikelaustrag, und mit einem in der Reingaskammer angeordneten Reingasauslass, wobei die Partikelaustragseinrichtung eine in der Reingaskammer angeordnete, wenigstens eine Reingaskammer-Reinigungsdüse aufweisende Reingaskammer-Reinigungseinrichtung zur im Reinigungsbetrieb erfolgenden Nassreinigung des bezüglich der Hochachse eine geneigte Filterebene aufweisenden Filters aufweist.

In einem druckschriftlich nicht niedergelegten Stand der Technik weist eine Partikelaustragseinrichtung einen zur Reinigung ausbaubaren Filter auf. Hierzu ist zweckmäßigerweise die Partikelaustragseinrichtung auf einer Hubsäule angeordnet, die geeignet ist, die Partikelaustragseinrichtung auf eine zum Ausbau des Filters angenehme Bedienerhöhe abzusenken.

JP H07 328379 A offenbart einen in einem zylindrischen Hauptkörper vorgesehenen und herausnehmbaren Staubfilter und ein Waschrohr, das den Staubfilter rückspülen kann. Der vom Staubfilter gesammelte Staub fällt auf natürliche Weise ab, aber wenn der Staubfilter verstopft, wird dieser mittels Rückspülwasser gereinigt. Der heruntergefallene Staub oder das Rückspülwasser wird über eine Staubablassöffnung in einen Abflusstank abgeleitet.

WO 2004/016988 A1 zeigt ein selbstreinigendes Abgassystem mit einem Oberteil, einer Vorderwand, einer Rückwand und Seitenwänden, die sich zwischen der Rückwand und der Vorderwand erstrecken sowie ein Ablenkblech, das von der Oberseite zwischen der Vorderwand und der Rückwand herabhängt. Eine Platte, die sich von der Rückwand nach vorne bis vor die Schallwand erstreckt. Ein erster Filter befindet sich in einem Luftströmungsweg. Ein erster Sprühauslass befindet sich in dem Luftströmungsweg vor dem ersten Filter, um ein erstes Reinigungsspray in den Luftstrom zu geben, sodass der Luftstrom das Reinigungsspray auf eine erste Oberfläche des ersten Filters zieht.

Die Aufgabe der Erfindung ist es daher eine Partikelaustragseinrichtung und ein Verfahren bereitzustellen, das eine ortsgebundene Reinigung (cleaning in place, CIP) ohne Ausbau des Filters ermöglicht.

Diese Aufgabe wird bei einer Partikelaustragseinrichtung der eingangs genannten Art dadurch gelöst, dass die Partikelaustragseinrichtung über eine von einem Bypasskanal durchsetzte Bypasseinrichtung verfügt, wobei der Bypasskanal einen mit der Reingaskammer verbundenen Bypasseinlass und einen mit der Prozesskammer verbundenen Bypassauslass aufweist, wobei die Bypasseinrichtung ferner über ein Bypasskanal-Absperrglied verfügt, das wahlweise in einer einen Fluiddurchtritt durch den Bypasskanal verhindernden Absperrstellung oder in mindestens einer den Fluiddurchtritt freigebenden Offenstellung positionierbar ist. Vorteilhafterweise wird durch diese Ausgestaltung der Partikelaustragseinrichtung eine CIP-Reinigung der Partikelaustragseinrichtung ermöglicht. Hierdurch entfällt zudem die Notwendigkeit einer kostenintensiven Hubsäule für die Partikelaustragseinrichtung.

Als Reinigungsbetrieb wird ein Betrieb der Partikelaustragseinrichtung bezeichnet, in dem der Filter bei unterbrochener Filtrierbeaufschlagung mittels wenigstens einer in der Partikelaustragseinrichtung angeordneter Reinigungseinrichtung von den Partikeln abgereinigt wird. Der während des Reinigungsbetriebsablaufende Vorgang wird als Nassreinigungsvorgang bezeichnet.

Nassreinigung bezeichnet eine Abreinigung des Filters mit einem als Flüssigkeit, wie insbesondere Wasser, ausgebildeten Reinigungsfluid während des Reinigungsbetriebs.

Als Trocknungsvorgang wird der Vorgang bezeichnet, der nach dem Nassreinigungsvorgang den Filter trocknet.

Im Gegensatz zum Reinigungsbetrieb wird als Arbeitsbetrieb ein Betrieb bezeichnet, in dem die in die Partikelaustragseinrichtung mittels des Prozessgases eingebrachten Partikel durch den Filter aus dem Prozessgasstrom abgetrennt werden.

Trockenreinigung bezeichnet eine Abreinigung des Filters mit einem Gas, insbesondere Luft, während des Arbeitsbetriebs.

Nach einer diesbezüglich vorteilhaften Weiterbildung der Partikelaustragseinrichtung weist die Bypasseinrichtung eine dem Bypasskanal-Absperrglied zugeordnete Absperrglied-Antriebseinrichtung auf, die das Bypasskanal-Absperrglied aus der Absperrstellung in eine Offenstellung verbringt und umgekehrt. Dadurch wird eine weitere Automatisierung der Partikelaustragseinrichtung erreicht.

Ferner ist vorteilhafterweise in der Prozesskammer eine wenigstens eine Prozesskammer-Reinigungsdüse aufweisende Prozesskammer-Reinigungseinrichtung angeordnet, wobei zweckmäßigerweise die wenigstens eine Prozesskammer-Reinigungsdüse radial von der Hochachse in Richtung einer Einrichtungsgehäusewandung und in entgegengesetzter Richtung bewegbar ist. Durch diese Fortbildung der Partikelaustragseinrichtung wird sichergestellt, dass nicht nur die Reingaskammer mittels der Reingas-Reinigungseinrichtung, sondern auch die Prozessgaskammer mittels der Prozessgas-Reinigungseinrichtung automatisch abreinigbar ist. Somit ist es nun möglich neben der Reinigung einer in der Reingaskammer angeordneten Filteroberseite auch eine in der Prozesskammer angeordnete Filterunterseite zu reinigen und damit den Filter von den Filter zusetzenden Partikeln zu befreien.

Entsprechend einer weiter bevorzugten Ausbildung der Partikelaustragseinrichtung ist der Partikelaustrag im Bereich eines Einrichtungsgehäusebodens angeordnet. Die Anordnung des Partikelaustrags am Einrichtungsgehäuseboden begünstigt zum einen ein Entleeren der Partikelaustragseinrichtung und zum anderen läuft das zweckmäßigerweise als Reinigungsflüssigkeit ausgebildete Reinigungsfluid durch die Schwerkraft bedingt zweckmäßigerweise über den Partikelaustrag aus der Partikelaustragseinrichtung.

Gemäß einer zusätzlichen vorteilhaften Fortbildung der Partikelaustragseinrichtung ist der Filter an seinem Randbereich mit einer Innenfläche der Einrichtungsgehäusewandung verbunden, sodass sich im Randbereich an der Einrichtungsgehäusewandung eine Reinigungsfluid-Sammelstelle ausbildet, die mit dem Bypasseinlass in Verbindung steht, wobei zweckmäßigerweise die Reinigungsfluid-Sammelstelle einen niedrigsten Punkt aufweist und der Bypasseinlass am niedrigsten Punkt der Reinigungsfluid-Sammelstelle mit dieser in Verbindung steht. Aufgrund des bezüglich der Hochachse eine geneigte Filterebene aufweisenden Filters - d.h. der Normalenvektor auf die Filterebene weist einen Winkel zur Hochachse auf - bildet sich im Randbereich des Filters angrenzend zu der Innenfläche der Einrichtungsgehäusewandung eine einen niedrigsten Punkt aufweisende Reinigungsfluid-Sammelstelle aus. Während eines im Reinigungsbetrieb bei unterbrochener Filtrierbeaufschlagung durchgeführten Nassreinigungsvorgangs versprüht die in der Reingaskammer angeordnete, zweckmäßigerweise wenigstens eine Reingaskammer-Reinigungsdüse aufweisende Reingaskammer-Reinigungseinrichtung zur Nassreinigung ein als Reinigungsflüssigkeit ausgebildetes Reinigungsfluid, das den Filter abreinigt und dabei über eine der Reingaskammer zugewandte Filteroberseite abläuft. Die Reinigungsflüssigkeit sammelt sich anschließend am niedrigsten Punkt der Reinigungsfluid-Sammelstelle, wo das Reinigungsfluid über den Bypasseinlass und den daran anschließenden Bypasskanal durch die Bypasseinrichtung strömen kann und in die Prozesskammer gelangt. Somit wird durch eine derartige Ausbildung der Partikelaustragseinrichtung gewährleistet, dass die Partikelaustragseinrichtung CIPreinigbar ist.

Bevorzugt verfügt die Partikelaustragseinrichtung über eine stromab des Reingasauslasses angeordnete Fördereinrichtung zur variablen Einstellung des Prozessgasstroms. Durch die Fördereinrichtung kann der Prozessgasstrom, der neben der Behandlung der Granulate in dem Behandlungsapparat auch zweckmäßigerweise die Partikel aus einem insbesondere als Fluidisierungsapparat ausgebildeten Behandlungsapparat in die Partikelaustragseinrichtung fördert, variabel eingestellt werden. Diesbezüglich weist die Fördereinrichtung eine Steuereinheit zur und eine Fördereinheit auf. Zur Einstellung des Prozessgasstromes kann entweder die zweckmäßigerweise als Gebläse ausgebildete Fördereinheit oder die zweckmäßigerweise über eine Regelfunktionalität verfügende Steuereinheit eingestellt werden. Bevorzugt ist die Steuereinheit als ein über eine Steuereinheit-Antriebseinrichtung verfügendes Regelventil oder als eine über eine Steuereinheit-Antriebseinrichtung verfügende Regelklappe ausgebildet. Hierdurch lassen sich einerseits Schwankungen des Gebläses in Bezug auf die Förderung des Prozessgasstroms ausgleichen und andererseits besteht die Möglichkeit über die als Regelventil oder Regelklappe ausgebildete Steuereinheit den Prozessgasstrom durch eine Anpassung der Durchtrittsfläche und somit des sich einstellenden Druckverlusts einzustellen.

Nach einer weiteren vorteilhaften Fortbildung der Partikelaustragseinrichtung verfügt die Partikelaustragseinrichtung über eine Trockenreinigungsvorrichtung, die geeignet ist, den Filter während des Arbeitsbetriebs abzureinigen. Hierdurch kann bei einem festgestellten hohen Druckverlust über dem Filter während des Arbeitsbetriebs der Filter einfach und dennoch effektiv abgereinigt werden. Ob der Filter mit Partikel bereits zugesetzt ist, kann u.a. mit einer Druckdifferenzmessung zwischen Prozesskammer und Reingaskammer erfolgen, wobei hierzu die Partikelaustragsvorrichtung eine Messeinrichtung aufweist, die geeignet ist eine Druckdifferenz zu erfassen. Andere Messverfahren sind denkbar.

Abschließend weist die Partikelaustragseinrichtung eine zweckmäßigerweise über eine Regelfunktionalität verfügende Steuerungseinrichtung auf, die insbesondere dazu geeignet ist, die Partikelaustragseinrichtung zu steuern und/oder zu regeln. Insbesondere ist die Steuerungseinrichtung konfiguriert, um die Fördereinrichtung und/oder die Absperrglied-Antriebeinrichtung und/oder die Steuereinheit-Antriebseinrichtung und/oder die Trockenreinigungs-Antriebseinrichtung und/oder die Reingaskammer-Reinigungseinrichtung und/oder die Prozesskammer-Reinigungseinrichtung zu steuern und/oder zu regeln. Vorteilhafterweise ist so ein automatisierter Betrieb möglich.

Ferner wird die Aufgabe bei einem Verfahren der eingangs genannten Art dadurch gelöst, dass die Partikelaustragseinrichtung über eine von einem Bypasskanal durchsetzte Bypasseinrichtung verfügt, wobei der Bypasskanal einen mit der Reingaskammer verbundenen Bypasseinlass und einen mit der Prozesskammer verbundenen Bypassauslass aufweist, wobei die Bypasseinrichtung ferner über ein Bypasskanal-Absperrglied verfügt, das wahlweise in einer einen Fluiddurchtritt durch den Bypasskanal verhindernden Absperrstellung oder in mindestens einer den Fluiddurchtritt freigebenden Offenstellung positionierbar ist, wobei im Reinigungsbetrieb die Reingaskammer-Reinigungseinrichtung ein als Reinigungsflüssigkeit ausgebildetes Reinigungsfluid ausbringt und das Bypasskanal-Absperrglied von einer Absperrstellung in eine Offenstellung verbracht wird, sodass das Reinigungsfluid zumindest teilweise durch den Bypasskanal von der Reingaskammer in die Prozessgaskammer strömen kann. Vorteilhafterweise wird durch dieses Verfahren eine CIP-Reinigung der Partikelaustragseinrichtung ermöglicht, wodurch nicht unerhebliche Investitionskosten, bspw. für eine kostenintensive Hubsäule einsparbar sind.

Nach einer diesbezüglich vorteilhaften Weiterbildung des Verfahrens wird das Bypasskanal-Absperrglied vor, während oder nach dem Ausbringen des Reinigungsfluids von der Absperrstellung in die Offenstellung verbracht. Vorteilhafterweise kann nach dem Öffnen des Bypasskanal-Absperrglieds das als Reinigungsflüssigkeit ausgebildete Reinigungsfluid anschließend über den Bypasseinlass und den daran anschließenden Bypasskanal durch die Bypasseinrichtung strömen und in die Prozesskammer gelangen, von wo es dann bspw. durch den Partikelaustrag ausbringbar ist.

Nach einer zusätzlichen vorteilhaften Ausgestaltung des Verfahrens wird das Reinigungsfluid über den Partikelaustrag aus der Prozesskammer ausgeschleust. Dies ermöglicht ein einfaches Ausbringen des als Reinigungsflüssigkeit ausgebildeten Reinigungsfluids.

Überdies wird bevorzugt nach der Nassreinigung der Filter getrocknet, indem ein unbeladenes Prozessgas die Partikelaustragseinrichtung durchströmt, wobei zumindest zu Beginn des Trocknungsvorgangs das Absperrglied in einer Offenstellung verbleibt, sodass das unbeladene Prozessgas zumindest teilweise durch die Bypasseinrichtung strömen kann. Entsprechend einer diesbezüglich vorteilhaften Weiterbildung des Verfahrens wird das unbeladene Prozessgas vor dem Durchströmen der Partikelaustragseinrichtung erwärmt, sodass das nach der Nassreinigung im Filter gebundene Reinigungsfluid verdunstet oder verdampft. Nach der Nassreinigung sind ein Großteil der Durchtrittsöffnungen des Filters mit der Reinigungsflüssigkeit zugesetzt, sodass der Filter einen sehr großen Druckverlust erzeugt. Aus diesem Grund bleibt oder wird das Bypasskanal-Absperrglied geöffnet, um dem unbeladenen Prozessgas zu ermöglichen durch die Prozesskammer am Filter vorbei in die Reingaskammer zu strömen. Mit voranschreitendem Trocknungsvorgang kann das Bypasskanal-Absperrglied weiter geschlossen werden, sodass das ein größerer Teil des unbeladenen Prozessgases gezwungen wird durch den Filter zu strömen. Dies bedeutet, dass das Bypasskanal-Absperrglied von der ursprünglichen Offenstellung in eine den Fluiddurchtritt stärker verhindernde Offenstellung verbracht wird. Hierdurch wird der Trocknungsvorgang deutlich verkürzt. Durch das erwärmte Prozessgas erwärmt sich auch der Filter, sodass das nach der Nassreinigung den Filter zusetzende Reinigungsfluid verdunstet oder verdampft. Sobald die Reinigungsflüssigkeit verdunstet oder verdampft ist und der Filter getrocknet ist, kann der Trocknungsvorgang gestoppt werden.

Nachfolgend wird die Erfindung anhand der beiliegenden Zeichnung näher erläutert und in dieser zeigen
- Figur 1: ein Verfahrensfließbild einer eine Partikelaustragseinrichtung aufweisenden Granulaterzeugungseinrichtung,
- Figur 2: eine perspektivische Darstellung der Partikelaustragseinrichtung,
- Figur 3: eine Untersicht der Partikelaustragseinrichtung,
- Figur 4: eine Schnittdarstellung der Partikelaustragseinrichtung durch eine in Fig. 3 gezeigte Schnittebene B-B und

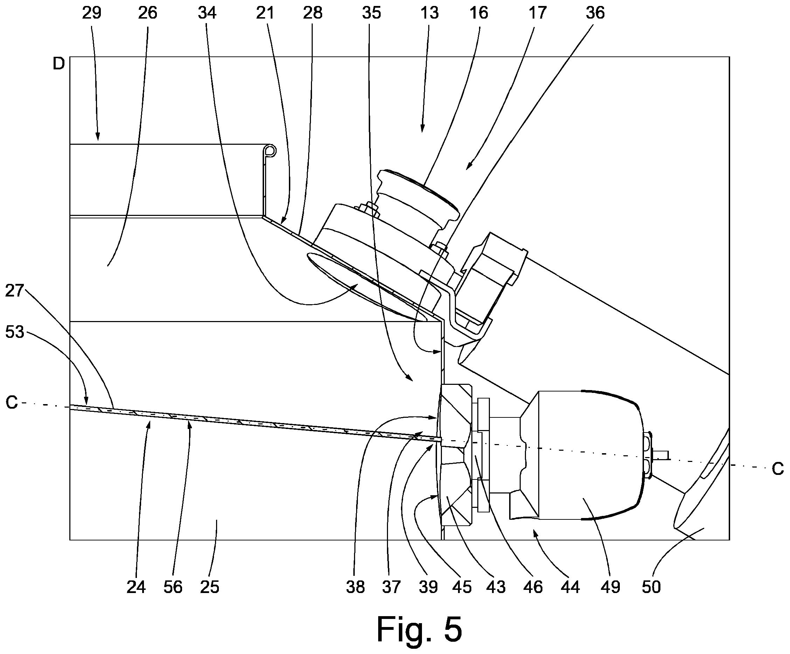

- Figur 5: eine vergrößerte Darstellung des in Fig. 4 gezeigten Ausschnitts D der Partikelaustragseinrichtung.

Sofern keine anderslautenden Angaben gemacht werden, bezieht sich die nachfolgende Beschreibung auf die in der Zeichnung illustrierte Ausführungsform einer bevorzugten Partikelaustragseinrichtung 1.

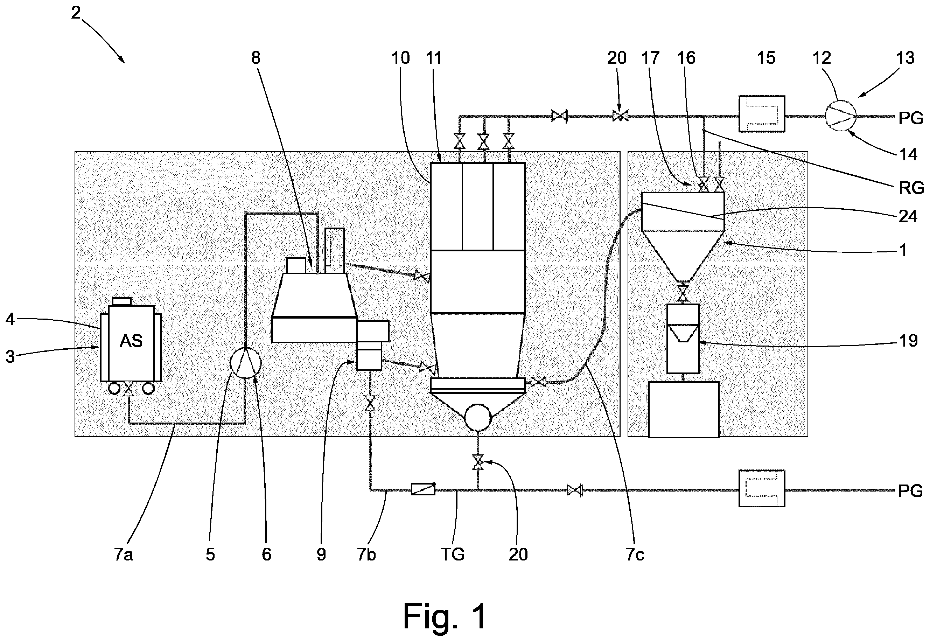

In der Fig. 1 wird ein Verfahrensfließbild einer die Partikelaustragseinrichtung 1 aufweisenden Granulaterzeugungseinrichtung 2 dargestellt, insbesondere zur Herstellung von als Partikel P bezeichneten Granulaten für die pharmazeutische Industrie.

Die exemplarisch dargestellte Granulaterzeugungseinrichtung 2 verfügt über einen Vorlagebehälter 3 für die Ausgangsstoffe AS, der als mobiler Suspensionstank 4 ausgebildet ist. Der Vorlagebehälter 3 ist über eine eine als Pumpe 5 ausgebildete Fördereinrichtung 6 aufweisende erste Förderleitung 7a mit einem Granulator 8 verbunden. Im Granulator 8 wird aus den Ausgangsstoffen AS Granulat erzeugt. In einer nicht dargestellten Ausführungsform werden die Ausgangsstoffe AS separat voneinander in den Granulator 8 gefördert.

Die im Granulator 8 erzeugten Granulate werden in einer an den Granulator 8 angeschlossenen Siebeinrichtung 9 gesiebt und anschließend mittels einer von einem als Transfergas TG ausgebildeten Prozessgas PG durchströmten zweiten Förderleitung 7b in einen als Wirbelschichttrockner 10 ausgebildeten Fluidisierungsapparat 11 gefördert. Im Fluidisierungsapparat 11 werden die gesiebten Granulate unter Verwendung von Prozessgas PG in einem fluidisierten Zustand weiterbehandelt, insbesondere getrocknet. Zur Erzeugung der Fluidisierung im Fluidisierungsapparat 11 verfügt die Granulaterzeugungseinrichtung 2 über eine einen Prozessgasstrom erzeugende als Fördereinheit 14 ausgebildete aufweisende Fördereinrichtung 13 auf. Die Fördereinheit 14 ist zweckmäßigerweise als Gebläse 12 oder als Ventilator ausgebildet.

Nach ihrer Behandlung im Fluidisierungsapparat 11 werden die dann behandelten und als Partikel P bezeichneten Granulate ebenfalls mittels der Fördereinrichtung 13 durch eine dritte Förderleitung 7c vom Prozessgas PG in die Produktaustragseinrichtung 1 gefördert. Zur variablen Einstellung des Prozessgasstromes weist die Fördereinrichtung 13 neben der einen vorgeschalteten Filtereinrichtung 15 aufweisenden Fördereinheit 12 eine als Regelventil 16 ausgebildete Steuereinheit 17 auf. Die vom Prozessgas PG in die Partikelaustragseinrichtung 1 geförderten Partikel P werden an einem Filter 24 aus dem Prozessgasstrom abgetrennt, wobei die Partikel P in einem Sammelbehälter 19 gesammelt und das als Reingas RG bezeichnete, abgereinigte Prozessgas PG von der Fördereinrichtung 13 aus der Granulaterzeugungseinrichtung 2 gefördert wird, bspw. in die Umgebung. Der Prozessgasstrom lässt sich in der Granulationserzeugungseinrichtung 2 zusätzlich über entsprechende Steuer- oder Regelventile 20 variabel einstellen.

Aufgrund der Anordnung der Fördereinrichtung 13 stromab des Fluidisierungsapparates 11 und stromab der Partikelaustragseinrichtung 1 herrscht in der Granulaterzeugungseinrichtung 2 ein Unterdruck. Der Unterdruck beträgt zweckmäßigerweise zwischen 50 mbar und 500 mbar, bevorzugt jedoch etwa 100 mbar.

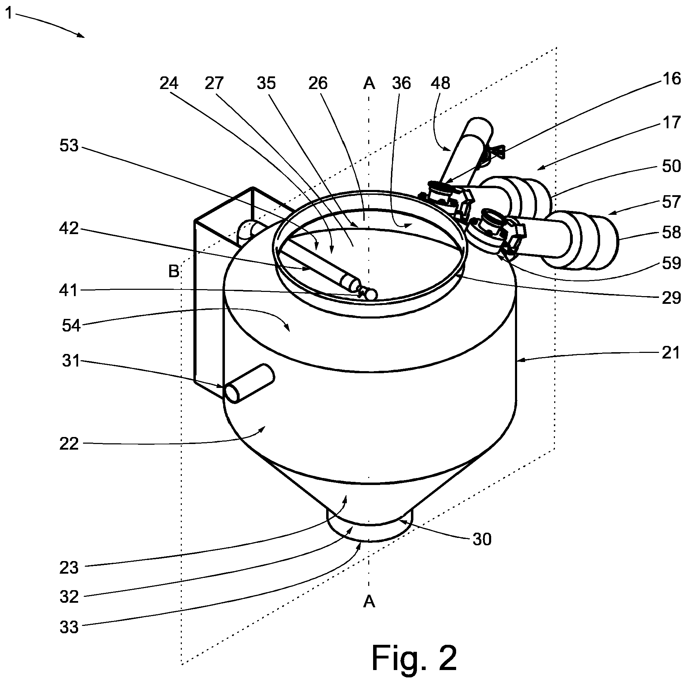

Fig. 2 zeigt die Partikelaustragseinrichtung 1 zum Abscheiden von Partikeln P aus dem Prozessgasstrom ist perspektivischer Darstellung.

Die Partikelaustragseinrichtung 1 weist ein über eine vertikal ausgerichtete Hochachse A-A verfügendes Einrichtungsgehäuse 21 auf. Das eine Einrichtungsgehäusewandung 28 aufweisende Einrichtungsgehäuse 21 verfügt in der gezeigten Ausführungsform über einen Einrichtungsgehäusedeckel 54, einen zylindrisch ausgebildeten Einrichtungsgehäuseabschnitt 22, einen konisch ausgebildeten Einrichtungsgehäuseabschnitt 23 und einen Einrichtungsgehäuseboden 30 auf.

In der gezeigten Ausführungsform ist im zylindrischen Einrichtungsgehäuseabschnitt 22 ein Filter 24 angeordnet, der das Einrichtungsgehäuse 21 in eine Prozesskammer 25 zur Aufnahme der aus dem Prozessgasstrom abgeschiedenen Partikel P und eine Reingaskammer 26 zur Aufnahme des entstaubten Prozessgas PG unterteilt. Hierbei erstreckt sich die Prozessgaskammer 25 über den konischen Einrichtungsgehäuseabschnitt 23 und teilweise den zylindrischen Einrichtungsgehäuseabschnitt 22. Die Reingaskammer 26 dagegen erstreckt sich ausschließlich über den zylindrischen Einrichtungsgehäuseabschnitt 22.

Der Filter 24 ist in der dargestellten Ausführungsform als Metallfilter 27 ausgebildet und ist bezüglich der Hochachse A-A in einer geneigten Filterebene C-C angeordnet, d.h. der Normalenvektor 51 auf die Filterebene C-C weist einen Winkel 52 zur Hochachse A-A auf. Der Winkel 52 hat vorzugsweise ein Winkelmaß von 1° bis 20°, insbesondere von 3° bis 10°. In einer nicht dargestellten Ausführungsform ist der Filter 24 als Textilfilter realisiert. Weiter ist der Filter 24 an seinem Randbereich 35 mit einer Innenfläche 36 der Einrichtungsgehäusewandung 28 verbunden. Im Randbereich 35 bildet sich dadurch bedingt an der Innenfläche 36 der Einrichtungsgehäusewandung 28 eine Reinigungsfluid-Sammelstelle 37 aus, die mit dem Bypasseinlass 38 in Verbindung steht, wobei zweckmäßigerweise, wie in der dargestellten Ausführungsform, die Reinigungsfluid-Sammelstelle 37 einen niedrigsten Punkt 39 aufweist und ein Bypasseinlass 38 am niedrigsten Punkt 39 der Reinigungsfluid-Sammelstelle 37 mit dieser in Verbindung steht.

Die Partikelaustragseinrichtung 1 verfügt zudem über eine von einem Bypasskanal 43 durchsetzte Bypasseinrichtung 44, wobei der Bypasskanal 43 den mit der Reingaskammer 26 verbundenen Bypasseinlass 38 und einen mit der Prozesskammer 25 verbundenen Bypassauslass 45 aufweist. Die Bypasseinrichtung 44 verfügt ferner über ein Bypasskanal-Absperrglied 46, das wahlweise in einer einen Fluiddurchtritt durch den Bypasskanal 44 verhindernden Absperrstellung oder in mindestens einer den Fluiddurchtritt freigebenden Offenstellung positionierbar ist. Um das Bypasskanal-Absperrglied 46 wahlweise aus der Absperrstellung in eine Offenstellung und umgekehrt zu verbringen weist die Bypasseinrichtung 44 zweckmäßigerweise eine dem Bypasskanal-Absperrglied 46 zugeordnete Absperrglied-Antriebseinrichtung 49 auf.

Ferner weist die Partikelaustragseinrichtung 1 eine in der Reingaskammer 26 angeordnete, wenigstens eine Reingaskammer-Reinigungsdüse 41 aufweisende Reingaskammer-Reinigungseinrichtung 42 zur im Reinigungsbetrieb erfolgenden Nassreinigung des bezüglich der Hochachse A-A eine geneigte Filterebene C-C aufweisenden Filters 24 auf, d.h. der Normalenvektor 51 auf die Filterebene C-C weist einen Winkel 52 zur Hochachse A-A auf. Der Winkel 52 hat vorzugsweise ein Winkelmaß von 1° bis 20°, insbesondere von 3° bis 10°. Hierdurch kann das als Reinigungsflüssigkeit ausgebildete Reinigungsfluid im Reinigungsbetrieb effektiv auf einer Filteroberseite 53 in Richtung der Reinigungsfluid-Sammelstelle 37 fließen, um dann durch den Bypasskanal 44 von der Reingaskammer 26 in die Prozesskammer 25 abzufließen.

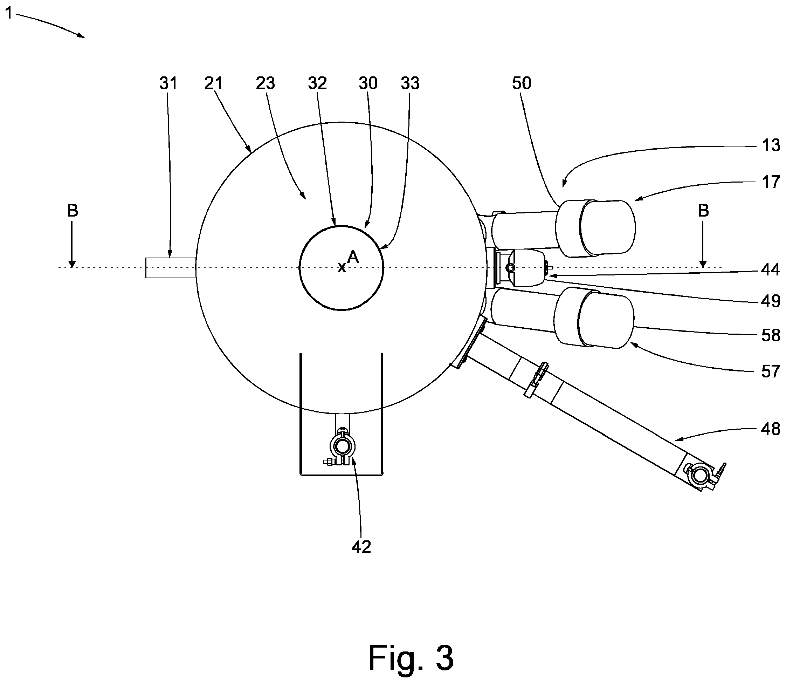

In der Prozesskammer 25 ist eine wenigstens eine Prozesskammer-Reinigungsdüse 47 aufweisende Prozesskammer-Reinigungseinrichtung 48 angeordnet, wie in einer Schnittdarstellung der Partikelaustragseinrichtung 1 durch eine in Fig. 3 gezeigte Schnittebene B-B erkennbar ist. Die Prozesskammer-Reinigungseinrichtung 48 ist in der gezeigten Ausführungsform als Reinigungslanze 55 ausgebildet, sodass die wenigstens eine Prozesskammer-Reinigungsdüse 47 radial von der Hochachse A-A in Richtung einer Einrichtungsgehäusewandung 28 und in entgegengesetzter Richtung bewegbar ist. Hierdurch besteht die Möglichkeit die Prozesskammer-Reinigungseinrichtung 48 im Arbeitsbetrieb aus der Prozesskammer 25 von der Hochachse A-A in Richtung einer Einrichtungsgehäusewandung 28 heraus zu bewegen und einen nicht gezeigten Prozesskammer-Reinigungseinrichtungskopf in der Einrichtungsgehäusewandung 28 flächenbündig mit dieser zu versenken, um eine Abscheidung der Partikel aus dem Prozessgas im Arbeitsbetrieb nicht zu behindern. Darüber hinaus wird die Prozesskammer-Reinigungseinrichtung 48 im Arbeitsbetrieb der Partikelaustragseinrichtung 1 stets von einem Fluid, zweckmäßigerweise von Prozessgas PG durchströmt, um ein Zusetzen der wenigstens eine Prozesskammer-Reinigungsdüse 47 mit Partikeln P zu verhindern. Im Reinigungsbetrieb ist die Prozesskammer-Reinigungseinrichtung 48 in der Prozesskammer 25 in Richtung der Hochachse A-A ausgefahren, um den Filter 24 an seiner Filterunterseite 56 von anhaftenden Partikeln P abzureinigen.

Im zylindrischen Einrichtungsgehäuseabschnitt 22 weist die Partikelaustragseinrichtung 1 einen an der Prozesskammer 25 angeordneten Partikeleintrag 31 auf. Über den Partikeleintrag 31 werden der Partikelaustragseinrichtung 1 im Arbeitsbetrieb Partikel zugeführt, die aus dem Fluidisierungsapparat 11 mittels Prozessgas über die Förderleitung 7c ausgetragen werden.

Im konischen Einrichtungsgehäuseabschnitt 23 verfügt die Partikelaustragseinrichtung 1 über einen im Bereich 32 des Einrichtungsgehäuseboden 29 angeordneten Partikelaustrag 33. Über den Partikelaustrag 32 werden die im Arbeitsbetrieb aus dem Prozessgas PG über den Filter 24 abgetrennten Partikel aus der Partikelaustragseinrichtung 1 ausgeschleust und in dem Sammelbehälter 19 gesammelt.

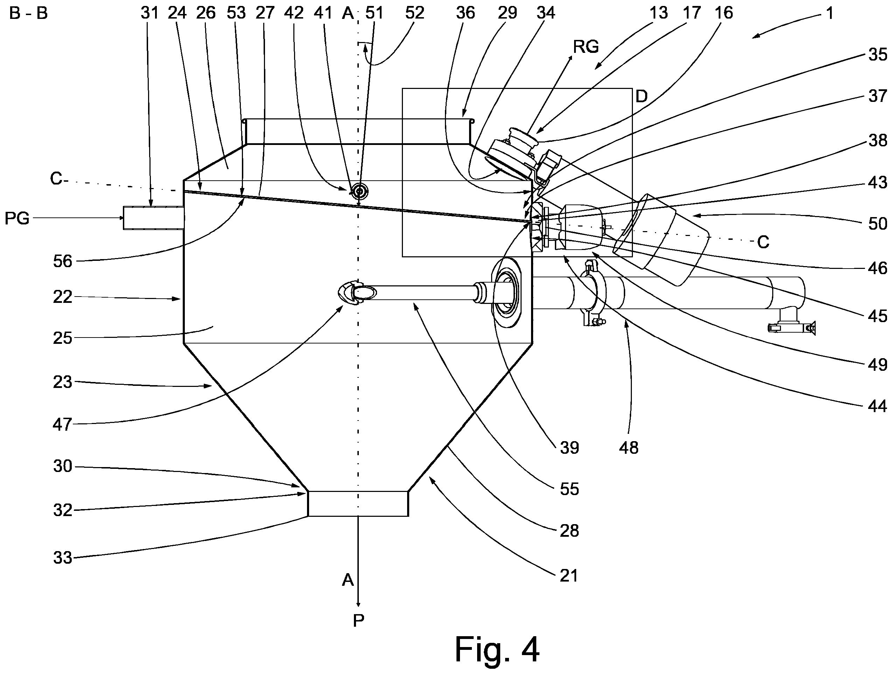

Überdies weist das Einrichtungsgehäuse 21 im Einrichtungsgehäusedeckel 54 neben einem für Inspektionszwecke angeordneten und sowohl im Arbeits- als auch im Reinigungsbetrieb verschlossenen Mannlochstutzen 29 einen mit der Reingaskammer 26 verbundenen Reingasauslass 34 auf, wie eine vergrößerte Darstellung des in Fig. 4 gezeigten Ausschnitts D der Partikelaustragseinrichtung 1 zeigt. Stromab des Reingasauslasses 34 verfügt die Partikelaustragseinrichtung 1 über die als Gebläse 12 ausgebildete Fördereinrichtung 13 zur variablen Einstellung des Prozessgasstroms. Die Fördereinrichtung 13 weist diesbezüglich die Fördereinheit 12 und die Steuereinheit 17 auf, wobei die Steuereinheit 17 in der gezeigten Ausführungsform als ein über eine Steuereinheit-Antriebseinrichtung 50 verfügendes Regelventil 16 ausgebildet ist. In einer nicht dargestellten Ausführungsform wird die Steuereinrichtung 17 als eine über eine Steuereinheit-Antriebseinrichtung 50 verfügende Regelklappe realisiert.

Die Partikelaustragseinrichtung 1 verfügt außerdem über eine Trockenreinigungseinrichtung 57 für den nass abgereinigten Filter 24. Die Trockenreinigungseinrichtung 57 ist in der gezeigten Ausführungsform als ein über eine Trockenreinigung-Antriebseinrichtung 58 verfügendes Regelventil 59 ausgebildet ist. In einer nicht dargestellten Ausführungsform wird die Trockenreinigungseinrichtung 57 als eine über eine Trockenreinigung-Antriebseinrichtung 58 verfügende Regelklappe realisiert.

Während des Arbeitsbetriebs, in dem die in die Partikelaustragseinrichtung 1 mittels des Prozessgases PG eingebrachten Partikel P durch den Filter 24 aus dem Prozessgasstrom abgetrennt werden, setzt sich der Filter 24 mit Partikeln P zu. Hierdurch erhöht sich der am Filter 24 entstehende Druckverlust soweit, dass eine Trocken- oder Nassreinigung des Filters notwendig wird, um die Partikel P von diesem abzureinigen.

Die Trockenreinigung erfolgt insbesondere während des Arbeitsbetriebs, in dem das Regelventil 16 geschlossen und das Regelventil 59 geöffnet wird, sodass der Filter 24 aufgrund des in der Partikelaustragseinrichtung 1 vorherrschenden Unterdrucks einen Druckstoß erfährt, der die den Filter 24 zusetzenden Partikel P zumindest teilweise vom Filter 24 abreinigt. Sobald die Trockenreinigung durchgeführt wurde, wird das Regelventil 16 geöffnet und das Regelventil 59 geschlossen und die Abscheidung der Partikel P aus dem Prozessgasstrom kann fortgesetzt werden. Die Trockenreinigung kann während des Arbeitsbetriebs zu jeder Zeit und in beliebiger Häufigkeit durchgeführt werden. In einer nicht gezeigten Ausführungsform wird die Trockenreinigungsvorrichtung dergestalt ausgeführt, dass zur Abreinigung Druckluft verwendet wird.

Als Reinigungsbetrieb wird ein Betrieb der Partikelaustragseinrichtung bezeichnet, in dem der Filter bei unterbrochener Filtrierbeaufschlagung von den Partikeln abgereinigt wird. Im Reinigungsbetrieb werden vorzugsweise das Regelventil 16 und das Regelventil 59 sowie der Partikeleintrag 31, wenn möglich, geschlossen.

Das Verfahren zur Nassreinigung der Partikelaustragseinrichtung 1 wird im Reinigungsbetrieb durchgeführt. Hierbei versprüht die Reingaskammer-Reinigungsdüse 41 der Reingaskammer-Reinigungseinrichtung 42 bei unterbrochener Filtrierbeaufschlagung ein als Reinigungsflüssigkeit ausgebildetes Reinigungsfluid in der Reingaskammer 26, wodurch die an dem Filter 24 anhaftenden Partikel P vom Filter 24 gelöst werden und somit der Filter 24 abgereinigt wird.

Der Filter 24 ist bezüglich der Hochachse A-A in einer geneigten Filterebene C-C angeordnet, d.h. der Normalenvektor 51 auf die Filterebene C-C weist einen Winkel 52 zur Hochachse A-A auf, sodass die versprühte Reinigungsflüssigkeit, wie Wasser oder ein anderes Lösungsmittel, auf der Filteroberseite 53 in Richtung der im Randbereich 35 des Filters 24 an der Einrichtungsgehäusewandung 28 ausgebildeten Reinigungsfluid-Sammelstelle 37 fließen kann.

Das Bypasskanal-Absperrglied 46 wird vor, während oder nach dem Ausbringen des Reinigungsfluids von der Absperrstellung in die Offenstellung verbracht. Bevorzugt wird das Bypasskanal-Absperrglied vor dem Ausbringen des Reinigungsfluids im Reinigungsbetrieb in die Offenstellung verbracht, sodass das sich an der Reinigungsfluid-Sammelstelle 37 ansammelnde Reinigungsfluid zumindest teilweise durch den Bypasskanal 43 von der Reingaskammer 26 in die Prozessgaskammer 25 strömen kann.

Das Reinigungsfluid wird anschließend zweckmäßigerweise über den Partikelaustrag 33 aus der Prozesskammer 25 ausgeschleust. In einer nicht dargestellten Ausführungsform wird das Reinigungsfluid über eine Reinigungsfluidaustragseinrichtung aus der Prozesskammer 25 ausgebracht.

Nach der Nassreinigung wird der Filter 24 getrocknet. Zur Trocknung des Filters 24 wird die Partikelaustragseinrichtung 1 von einem unbeladenen Prozessgas PG durchströmt, wobei zumindest zu Beginn des Trocknungsvorgangs das Bypasskanal-Absperrglied 46 in einer Offenstellung verbleibt, sodass das unbeladene Prozessgas PG zumindest teilweise durch die Bypasseinrichtung 44 strömen kann. Hierbei wird das unbeladene Prozessgas PG vor dem Durchströmen der Partikelaustragseinrichtung 1 zweckmäßigerweise erwärmt, sodass das nach der Nassreinigung im Filter 24 gebundene Reinigungsfluid verdunstet oder verdampft. Mit voranschreitendem Trocknungsvorgang wird zweckmäßigerweise das Bypasskanal-Absperrglied 46 immer weiter geschlossen, bis sich am Ende des Trocknungsvorgangs das Bypasskanal-Absperrglied 46 in seiner Absperrstellung befindet.

## Patentansprüche

1. Partikelaustragseinrichtung (1) zum Abscheiden von Partikeln (P) aus einem Prozessgasstrom, mit einem über eine vertikal ausgerichtete Hochachse (A-A) verfügenden Einrichtungsgehäuse (21), mit einem das Einrichtungsgehäuse (21) in eine die abzuscheidenden Partikel (P) aufweisende Prozesskammer (25) und eine das entstaubte Prozessgas (PG) aufnehmende Reingaskammer (26) unterteilenden Filter (24), mit einem an der Prozesskammer (25) angeordneten Partikeleintrag (31) und einem an der Prozesskammer (25) angeordneten Partikelaustrag (33), und mit einem in der Reingaskammer (26) angeordneten Reingasauslass (34), wobei die Partikelaustragseinrichtung (1) eine in der Reingaskammer (26) angeordnete, wenigstens eine Reingaskammer-Reinigungsdüse (41) aufweisende Reingaskammer-Reinigungseinrichtung (42) zur im Reinigungsbetrieb erfolgenden Nassreinigung des bezüglich der Hochachse (A-A) eine geneigte Filterebene (C-C) aufweisenden Filters (24) aufweist, **dadurch gekennzeichnet, dass** die Partikelaustragseinrichtung (1) über eine von einem Bypasskanal (43) durchsetzte Bypasseinrichtung (44) verfügt, wobei der Bypasskanal (43) einen mit der Reingaskammer (26) verbundenen Bypasseinlass (38) und einen mit der Prozesskammer (25) verbundenen Bypassauslass (45) aufweist, wobei die Bypasseinrichtung (44) ferner über ein Bypasskanal-Absperrglied (46) verfügt, das wahlweise in einer einen Fluiddurchtritt durch den Bypasskanal (43) verhindernden Absperrstellung oder in mindestens einer den Fluiddurchtritt freigebenden Offenstellung positionierbar ist.

2. Partikelaustragseinrichtung (1) nach Anspruch 1, **dadurch gekennzeichnet, dass** die Bypasseinrichtung (44) eine dem Bypasskanal-Absperrglied (46) zugeordnete Absperrglied-Antriebseinrichtung (49) aufweist, die das Bypasskanal-Absperrglied (46) aus der Absperrstellung in eine Offenstellung verbringt und umgekehrt.

3. Partikelaustragseinrichtung (1) nach einem der vorhergehenden Ansprüche, **dadurch gekennzeichnet, dass** in der Prozesskammer (25) eine wenigstens eine Prozesskammer-Reinigungsdüse (47) aufweisende Prozesskammer-Reinigungseinrichtung (48) angeordnet ist, wobei zweckmäßigerweise die wenigstens eine Prozesskammer-Reinigungsdüse (47) radial von der Hochachse (A-A) in Richtung einer Einrichtungsgehäusewandung (28) und in entgegengesetzter Richtung bewegbar ist.

4. Partikelaustragseinrichtung (1) nach einem der vorhergehenden Ansprüche, **dadurch gekennzeichnet, dass** der Partikelaustrag (33) im Bereich (32) eines Einrichtungsgehäusebodens (30) angeordnet ist.

5. Partikelaustragseinrichtung (1) nach einem der vorhergehenden Ansprüche, **dadurch gekennzeichnet, dass** der Filter (24) an seinem Randbereich (35) mit einer Innenfläche (36) der Einrichtungsgehäusewandung (28) verbunden ist, sodass sich im Randbereich (35) an der Einrichtungsgehäusewandung (28) eine Reinigungsfluid-Sammelstelle (37) ausbildet, die mit dem Bypasseinlass (38) in Verbindung steht, wobei zweckmäßigerweise die Reinigungsfluid-Sammelstelle (37) einen niedrigsten Punkt (39) aufweist und der Bypasseinlass (38) am niedrigsten Punkt (39) der Reinigungsfluid-Sammelstelle (37) mit dieser in Verbindung steht.

6. Partikelaustragseinrichtung (1) nach einem der vorhergehenden Ansprüche, **dadurch gekennzeichnet, dass** die Partikelaustragseinrichtung (1) über eine stromab des Reingasauslasses (34) angeordnete Fördereinrichtung (13) zur variablen Einstellung des Prozessgasstroms verfügt.

7. Partikelaustragseinrichtung (1) nach Anspruch 6, **dadurch gekennzeichnet, dass** die Fördereinrichtung (13) eine zweckmäßigerweise eine über Regelfunktionalität verfügende Steuereinheit (17) zur und eine Fördereinheit (14) aufweist.

8. Partikelaustragseinrichtung (1) nach Anspruch 7, **dadurch gekennzeichnet, dass** die Steuereinheit (17) als ein über eine Steuereinheit-Antriebseinrichtung (50) verfügendes Regelventil (16) oder als eine über eine Steuereinheit-Antriebseinrichtung (50) verfügende Regelklappe ausgebildet ist.

9. Partikelaustragseinrichtung (1) nach einem der vorhergehenden Ansprüche, **dadurch gekennzeichnet, dass** die Partikelaustragseinrichtung (1) über eine Trockenreinigungsvorrichtung verfügt, die geeignet ist, den Filter während des Arbeitsbetriebs abzureinigen.

10. Verfahren zur Nassreinigung einer Partikelaustragseinrichtung (1) zum Abscheiden von Partikeln (P) aus einem Prozessgasstrom, mit einem über eine vertikal ausgerichtete Hochachse (A-A) verfügenden Einrichtungsgehäuse (21), mit einem das Einrichtungsgehäuse (21) in eine die abzuscheidenden Partikel (P) aufweisende Prozesskammer (25) und eine das entstaubte Prozessgas (PG) aufnehmende Reingaskammer (26) unterteilenden Filter (24), mit einem an der Prozesskammer (25) angeordneten Partikeleintrag (31) und einem an der Prozesskammer (25) angeordneten Partikelaustrag (33), und mit einem in der Reingaskammer (26) angeordneten Reingasauslass (34), wobei die Partikelaustragseinrichtung (1) eine in der Reingaskammer (26) angeordnete, wenigstens eine Reingaskammer-Reinigungsdüse (41) aufweisende Reingaskammer-Reinigungseinrichtung (42) zur im Reinigungsbetrieb erfolgenden Nassreinigung des bezüglich der Hochachse (A-A) eine geneigte Filterebene (C-C) aufweisenden Filters (24) aufweist, **dadurch gekennzeichnet, dass** die Partikelaustragseinrichtung (1) über eine von einem Bypasskanal (43) durchsetzte Bypasseinrichtung (44) verfügt, wobei der Bypasskanal (43) einen mit der Reingaskammer (26) verbundenen Bypasseinlass (38) und einen mit der Prozesskammer (25) verbundenen Bypassauslass (45) aufweist, wobei die Bypasseinrichtung (44) ferner über ein Bypasskanal-Absperrglied (46) verfügt, das wahlweise in einer einen Fluiddurchtritt durch den Bypasskanal (43) verhindernden Absperrstellung oder in mindestens einer den Fluiddurchtritt freigebenden Offenstellung positionierbar ist, wobei im Reinigungsbetrieb die Reingaskammer-Reinigungseinrichtung (42) ein als Reinigungsflüssigkeit ausgebildetes Reinigungsfluid ausbringt und das Bypasskanal-Absperrglied (46) von einer Absperrstellung in eine Offenstellung verbracht wird, sodass das Reinigungsfluid zumindest teilweise durch den Bypasskanal (43) von der Reingaskammer (26) in die Prozessgaskammer (25) strömen kann.

11. Verfahren nach Anspruch 10, **dadurch gekennzeichnet, dass** das Bypasskanal-Absperrglied (46) vor, während oder nach dem Ausbringen des Reinigungsfluids von der Absperrstellung in die Offenstellung verbracht wird.

12. Verfahren nach Anspruch 10 oder 11, **dadurch gekennzeichnet, dass** das Reinigungsfluid über den Partikelaustrag (33) aus der Prozesskammer (25) ausgeschleust wird.

13. Verfahren nach einem der Ansprüche 10 bis 12, **dadurch gekennzeichnet, dass** nach der Nassreinigung der Filter (24) getrocknet wird, indem ein unbeladenes Prozessgas (PG) die Partikelaustragseinrichtung (1) durchströmt, wobei zumindest zu Beginn des Trocknungsvorgangs das Absperrglied (46) in einer Offenstellung verbleibt, sodass das unbeladene Prozessgas (PG) zumindest teilweise durch die Bypasseinrichtung (44) strömen kann.

14. Verfahren nach Anspruch 13, **dadurch gekennzeichnet, dass** mit voranschreitendem Trocknungsvorgang das Bypasskanal-Absperrglied weiter geschlossen wird.

15. Verfahren nach Anspruch 13 oder 14, **dadurch gekennzeichnet, dass** das unbeladene Prozessgas (PG) vor dem Durchströmen der Partikelaustragseinrichtung (1) erwärmt wird, sodass das nach der Nassreinigung im Filter (24) gebundene Reinigungsfluid verdunstet oder verdampft.

## Claims

1. Particle removal device (1) for separating particles (P) from a process gas flow, with a housing (21) comprising a vertically oriented longitudinal axis (A-A), with a filter (24) subdividing the housing (21) into a process chamber (25) comprising the particles (P) to be separated and a clean gas chamber (26) receiving the dedusted process gas (PG), with a particle inlet (31) arranged on the process chamber (25) and a particle discharge (33) arranged on the process chamber (25), and with a clean gas outlet (34) arranged in the clean gas chamber (26), wherein the particle removal device (1) comprises a clean gas chamber cleaning device (42) arranged in the clean gas chamber (26) and having at least one clean gas chamber cleaning nozzle (41) for wet cleaning of the filter, which comprises a filter plane (C-C) inclined with respect to the longitudinal axis (A-A), during the cleaning process, **characterized in that** the particle removal device (1) comprises a bypass device (44) through which a bypass channel (43) passes, wherein the bypass channel (43) comprises a bypass inlet (38) connected to the clean gas chamber (26) and a bypass outlet (45) connected to the process chamber (25), wherein the bypass device (44) further comprises a bypass channel gate valve (46) that can be selectively positioned in a closed position preventing fluid flow through the bypass channel (43) or in at least one open position allowing fluid flow.

2. Particle removal device (1) according to claim 1, **characterized in that** the bypass device (44) comprises a gate valve drive unit (49) associated with the bypass channel gate valve (46), which brings the bypass channel gate valve (46) from the closed position into an open position and vice versa.

3. Particle removal device (1) according to one of the preceding claims, **characterized in that** a process chamber cleaning device (48) comprising at least one process chamber cleaning nozzle (47) is arranged in the process chamber (25), wherein it is expediently possible to move the at least one process chamber cleaning nozzle (47) radially from the longitudinal axis (A-A) in the direction of a housing wall (28) and in the opposite direction.

4. Particle removal device (1) according to one of the preceding claims, **characterized in that** the particle discharge (33) is arranged in the area (32) of a housing floor (30).

5. Particle removal device (1) according to one of the preceding claims, **characterized in that** the filter (24) is connected at its peripheral area (35) to an inner surface (36) of the housing wall (28), so that a cleaning fluid collection area (37) is formed in the peripheral area (35) on the housing wall (28), which is connected to the bypass inlet (38), wherein the cleaning fluid collection area (37) expediently comprises a lowest point (39) and the bypass inlet (38) is connected to the cleaning fluid collection area (37) at the lowest point (39) of the latter.

6. Particle removal device (1) according to one of the preceding claims, **characterized in that** the particle removal device (1) comprises a conveying device (13) arranged downstream of the clean gas outlet (34) for the variable setting of the process gas flow.

7. Particle removal device (1) according to claim 6, **characterized in that** the conveying device (13) expediently comprises a control unit (17) for closed-loop control functionality and a conveying unit (14).

8. Particle removal device (1) according to claim 7, **characterized in that** the control unit (17) is in the form of a control valve (16) comprising a control unit drive device (50) or of a control flap comprising a control unit drive device (50).

9. Particle removal device (1) according to one of the preceding claims, **characterized in that** the particle removal device (1) comprises a dry-cleaning device which is suitable for cleaning the filter during process operation.

10. Method for wet-cleaning a particle removal device (1) for separating particles (P) from a process gas flow, with a housing (21) comprising a vertically oriented longitudinal axis (A-A), with a filter (24) subdividing the housing (21) into a process chamber (25) comprising the particles (P) to be separated and a clean gas chamber (26) receiving the dedusted process gas (PG), with a particle inlet (31) arranged on the process chamber (25) and a particle discharge (33) arranged on the process chamber (25), and with a clean gas outlet (34) arranged in the clean gas chamber (26), the particle removal device (1) comprises a clean gas chamber cleaning device (42) arranged in the clean gas chamber (26) and having at least one clean gas chamber cleaning nozzle (41) for wet cleaning of the filter, which comprises a filter plane (C-C) inclined with respect to the longitudinal axis (A-A), during the cleaning process, **characterized in that** the particle removal device (1) comprises a bypass device (44) through which a bypass channel (43) passes, wherein the bypass channel (43) comprises a bypass inlet (38) connected to the clean gas chamber (26) and a bypass outlet (45) connected to the process chamber (25), wherein the bypass device (44) further comprises a bypass channel gate valve (46) that can be selectively positioned in a closed position preventing fluid flow through the bypass channel (43) or in at least one open position allowing fluid flow, wherein, in the cleaning operation, the clean gas chamber cleaning device (42) outputs a cleaning fluid in the form of a cleaning liquid and the bypass channel gate valve (46) is moved from a closed position into an open position so that the cleaning fluid can flow at least partially through the bypass channel (43) from the clean gas chamber (26) into the process gas chamber (25).

11. Method according to claim 10, **characterized in that** the bypass channel gate valve (46) is moved from the closing position into the opening position before, during or after the cleaning fluid is output.

12. Method according to claim 10 or 11, **characterized in that** the cleaning fluid is discharged from the process chamber (25) via the particle discharge (33).

13. Method according to one of claims 10 to 12, **characterized in that** after the wet cleaning, the filter (24) is dried by an unloaded process gas (PG) flowing through the particle removal device (1), wherein at least at the beginning of the drying process, the bypass channel gate valve (46) remains in an opening position so that the unloaded process gas (PG) can at least partially flow through the bypass device (44).

14. Method according to claim 13, **characterized in that**, as the drying process progresses, the bypass channel gate valve is gradually closed.

15. Method according to claim 13 or 14, **characterized in that** the unloaded process gas (PG) is heated before flowing through the particle removal device (1), so that the cleaning fluid retained in the filter (24) after the wet cleaning evaporates or vaporizes.

## Revendications

1. Dispositif d'évacuation de particules (1) pour séparer des particules (P) d'un flux de gaz de processus, avec un boîtier de dispositif (21) disposant d'un axe vertical (A-A), avec un filtre (24) divisant le boîtier de dispositif (21) en une chambre de processus (25), présentant les particules (P) à séparer, et en une chambre de gaz pur (26) recevant le gaz de processus (PG) dépoussiéré, avec une entrée de particules (31) disposée sur la chambre de processus (25) et une sortie de particules (33) disposée sur la chambre de processus (25), et avec une sortie de gaz pur (34) disposée dans la chambre de gaz pur (26), dans lequel le dispositif d'évacuation de particules (1) présente un dispositif de nettoyage de chambre de gaz pur (42) disposé dans la chambre de gaz pur (26), présentant au moins une buse de nettoyage de chambre de gaz pur (41) pour le nettoyage humide du filtre (24) présentant un plan de filtre (C-C) incliné par rapport à l'axe vertical (A-A) en mode de nettoyage, **caractérisé en ce que** le dispositif d'évacuation de particules (1) dispose d'un dispositif de dérivation (44) traversé par un canal de dérivation (43), dans lequel le canal de dérivation (43) présente une entrée de dérivation (38) reliée à la chambre de gaz pur (26) et une sortie de dérivation (45) reliée à la chambre de processus (25), dans lequel le dispositif de dérivation (44) dispose en outre d'un organe d'arrêt de canal de dérivation (46), qui peut être positionné au choix soit dans une position d'arrêt empêchant un passage du fluide à travers le canal de dérivation (43), soit dans au moins une position ouverte permettant le passage du fluide.

2. Dispositif d'évacuation de particules (1) selon la revendication 1, **caractérisé en ce que** le dispositif de dérivation (44) présente un dispositif d'entraînement d'organe d'arrêt (49) associé à l'organe d'arrêt de canal de dérivation (46), qui amène l'organe d'arrêt de canal de dérivation (46) de la position d'arrêt dans une position ouverte et inversement.

3. Dispositif d'évacuation de particules (1) selon l'une quelconque des revendications précédentes, **caractérisé en ce qu'**un dispositif de nettoyage de chambre de processus (48) présentant au moins une buse de nettoyage de chambre de processus (47) est disposé dans la chambre de processus (25), dans lequel de manière appropriée l'au moins une buse de nettoyage de chambre de processus (47) peut être déplacée radialement de l'axe vertical (A-A) en direction d'une paroi de boîtier de dispositif (28) et dans la direction opposée.

4. Dispositif d'évacuation de particules (1) selon l'une quelconque des revendications précédentes, **caractérisé en ce que** la sortie de particules (33) est disposée dans la zone (32) d'un fond du boîtier de dispositif (30).

5. Dispositif d'évacuation de particules (1) selon l'une quelconque des revendications précédentes, **caractérisé en ce que** le filtre (24) est relié, sur sa zone de bord (35), à une surface intérieure (36) de la paroi de boîtier de dispositif (28), si bien qu'un point de collecte de fluide de nettoyage (37) se forme dans la zone de bord (35) sur la paroi de boîtier de dispositif (28), qui est en liaison avec l'entrée de dérivation (38), dans lequel de manière appropriée le point de collecte de fluide de nettoyage (37) présente un point le plus bas (39) et l'entrée de dérivation (38) est reliée sur le point le plus bas (39) du point de collecte de fluide de nettoyage (37) à celui-ci.

6. Dispositif d'évacuation de particules (1) selon l'une quelconque des revendications précédentes, **caractérisé en ce que** le dispositif d'évacuation de particules (1) dispose d'un dispositif de convoyage (13) disposé en aval de la sortie de gaz pur (34) pour le réglage variable du débit de gaz de processus.

7. Dispositif d'évacuation de particules (1) selon la revendication 6, **caractérisé en ce que** le dispositif de convoyage (13) présente de manière appropriée une unité de commande (17) disposant d'une fonctionnalité de régulation et une unité de convoyage (14).

8. Dispositif d'évacuation de particules (1) selon la revendication 7, **caractérisé en ce que** l'unité de commande (17) est réalisée comme une vanne de régulation (16) disposant d'un dispositif d'entraînement d'unité de commande (50) ou comme un clapet de régulation disposant d'un dispositif d'entraînement d'unité de commande (50).

9. Dispositif d'évacuation de particules (1) selon l'une quelconque des revendications précédentes, **caractérisé en ce que** le dispositif d'évacuation de particules (1) dispose d'un système de nettoyage à sec qui est adapté pour nettoyer le filtre pendant le fonctionnement.

10. Procédé de nettoyage humide d'un dispositif d'évacuation de particules (1) pour séparer des particules (P) d'un flux de gaz de processus , avec un boîtier de dispositif (21) disposant d'un axe vertical (A-A), avec un filtre (24) divisant le boîtier de dispositif (21) en une chambre de processus (25) présentant les particules (P) à séparer et en une chambre de gaz pur (26) recevant le gaz de processus (PG) dépoussiéré, avec une entrée de particules (31) disposée sur la chambre de processus (25) et une sortie de particules (33) disposée sur la chambre de processus (25), et avec une sortie de gaz pur (34) disposée dans la chambre de gaz pur (26),
dans lequel le dispositif d'évacuation de particules (1) présente un dispositif de nettoyage de chambre de gaz pur (42) disposé dans la chambre de gaz pur (26), présentant au moins une buse de nettoyage de chambre de gaz pur (41) pour le nettoyage humide en mode de nettoyage du filtre (24) présentant un plan de filtre (C-C) incliné par rapport à l'axe vertical (A-A), **caractérisé en ce que** le dispositif d'évacuation de particules (1) dispose d'un dispositif de dérivation (44) traversé par un canal de dérivation (43), dans lequel le canal de dérivation (43) présente une entrée de dérivation (38) reliée à la chambre de gaz pur (26) et une sortie de dérivation (45) reliée à la chambre de processus (25), dans lequel le dispositif de dérivation (44) dispose en outre d'un organe d'arrêt de canal de dérivation (46) qui peut être positionné au choix dans une position d'arrêt empêchant un passage de fluide à travers le canal de dérivation (43) ou dans au moins une position ouverte permettant le passage de fluide, dans lequel, en mode de nettoyage, le dispositif de nettoyage de chambre de gaz pur (42) distribue un fluide de nettoyage réalisé en tant qu'un liquide de nettoyage et l'organe d'arrêt de canal de dérivation (46) est amené d'une position d'arrêt dans une position ouverte, permettant ainsi au fluide de nettoyage de s'écouler au moins en partie à travers le canal de dérivation (43) depuis la chambre de gaz pur (26) dans la chambre de gaz de processus (25).

11. Procédé selon la revendication 10, **caractérisé en ce que** l'organe de fermeture de canal de dérivation (46) est amené depuis la position d'arrêt dans la position ouverte avant, pendant ou après la distribution du fluide de nettoyage.

12. Procédé selon la revendication 10 ou 11, **caractérisé en ce que** le fluide de nettoyage est évacué de la chambre de processus (25) par l'intermédiaire de la sortie de particules (33).

13. Procédé selon l'une quelconque des revendications 10 à 12, **caractérisé en ce qu'**après le nettoyage humide, le filtre (24) est séché **en ce qu'**un gaz de processus (PG) non chargé traverse le dispositif d'évacuation des particules (1), dans lequel l'organe d'arrêt (46) reste au moins au début du processus de séchage dans une position ouverte si bien que le gaz de processus (PG) non chargé peut s'écouler au moins en partie à travers le dispositif de dérivation (44).

14. Procédé selon la revendication 13, **caractérisé en ce que** l'organe d'arrêt de canal de dérivation est progressivement fermé au fur et à mesure que le processus de séchage progresse.

15. Procédé selon la revendication 13 ou 14, **caractérisé en ce que** le gaz de processus (PG) non chargé est chauffé avant de traverser le dispositif d'évacuation de particules (1) si bien que le fluide de nettoyage retenu dans le filtre (24) après le nettoyage humide se volatilise ou s'évapore.
